Europäisches Patentamt

European Patent Office

Office européen des brevets

(11) Publication number: **0 510 737 A1**

# EUROPEAN PATENT APPLICATION

(21) Application number: **92200735.6**

(22) Date of filing: **13.03.92**

(51) Int. Cl.5: **F16D 66/02**

(30) Priority: **22.04.91 GB 9108577**

(43) Date of publication of application:
**28.10.92 Bulletin 92/44**

(84) Designated Contracting States:
**AT BE CH DE DK ES FR GR IT LI LU MC NL PT SE**

(71) Applicant: **GENERAL MOTORS FRANCE**
**56 à 68 Avenue Louis Roche**
**F-92231 Gennevilliers Paris(FR)**

(72) Inventor: **Valmir, Francis**
**99 rue de Malcouture**
**F-95100 Argenteuil(FR)**
Inventor: **Pantale, David**
**Bâtiment E, 51 Boulevard Foch**
**F-93800 Epinay sur Seine(FR)**

(74) Representative: **Denton, Michael John et al**
**Patent Section 1st Floor Gideon House 28**
**Chapel Street**
**Luton Bedfordshire LU1 2SE(GB)**

(54) Brake wear indicating device.

(57) A brake wear indicating device 1 for use in sensing the wear of a friction lining of a vehicle brake comprises a metal conductor 10 attached to an end cap 12 of insulating material. The end cap 12 comprises first and second arms 14,16 extending parallel to one another, and first and second fingers 22,24 each extending from a respective arm to the other finger. Male and female connectors 26,32 engage one another to provide a positive connection between the first and second fingers 22,24. When fitted to the backing plate 18 of a brake pad 20, the positive connection prevents the brake wear indicating device 1 from coming loose when subjected to severe vibration or high temperatures.

Fig.1.

The present invention relates to a brake wear indicating device for use in sensing the wear of a friction lining of a vehicle brake.

Several types of brake wear indicating device are known. One such type, for use in a drum brake, is described in GB-A-2,042,109 and comprises an insulated metal conductor located at a predetermined distance above the front surface of the backing plate of a brake shoe, in proximity to the friction lining, and a warning indicator connected to the metal conductor. In use, the friction lining is gradually worn by the drum, until the drum breaks the insulation of the metal conductor and comes into contact with it. On so doing, an electrical circuit is formed through the metal conductor, the brake drum and the warning indicator, and the indicator is actuated to warn the driver that the brake shoe must be replaced.

A problem associated with some known types of brake wear indicating device is that the indicating device can come loose from the backing plate of the brake shoe or brake pad, in which event, the circuit through the drum or rotor and the metal conductor is never completed; thereby resulting in the failure to warn the driver that the friction lining has become worn. This can be the case particularly when the brake wear indicating device is subjected to severe vibration and/or high temperatures.

The present invention seeks to provide an improved brake wear indicating device.

Accordingly, an aspect of the present invention provides a brake wear indicating device for use in sensing the wear of a friction lining of a vehicle brake as specified in claim 1.

Preferably, the brake wear indicating device comprises a second finger extending from the second arm towards the first arm, the first and second fingers extending towards one another, the connecting means being adapted to connect the first finger to the second arm through the second finger.

In use, the device is attached to the backing plate of the brake pad or shoe by fitting the finger or fingers into an aperture in the backing plate and engaging the connecting means. In this manner, a positive connection is provided between the first finger and the second arm to reduce the risk of the device coming away from the backing plate.

Preferably, the connecting means comprises a male connector on one of the first and second fingers, and a female connector on the other of the first and second fingers. Advantageously, the male and female connectors provide a snap fit. In this manner, the fingers can be easily connected to one another during assembly of the brake.

The connecting means may be adapted to connect releasably the first finger to the second arm. The device can thus be removed from the backing plate, for example during servicing or if the friction lining has not been fully worn, and, if not damaged, fitted to a new brake pad or shoe.

In an embodiment, the first and second arms are made of resiliently flexible material. This allows the arms to be readily urged apart for fitting onto the backing plate.

The or each strengthening element may be a metal insert. In cases where the device is likely to be subjected to severe vibration and/or high temperatures, the strengthening element(s) can reduce the chances of failure of the device.

Preferably, each arm comprises at the free end thereof a bevelled edge arranged to slope towards the space between the first and second arms. The device can thus be pushed onto the backing plate from a side thereof close to the aperture in which the fingers are received, the arms opening on application of pressure to part the fingers from one another and, advantageously, to allow the device to be attached by a simple push-fit. The connecting means can then be engaged, for example, simply by pressing the fingers together.

The end cap may encapsulate and seal one end of the metal conductor. The encapsulated and sealed end is the end used to detect wear of the friction lining, and thus will be prevented from being electrically shorted until the rotor or drum brakes the insulation, that is once there has been the desired amount of wear of the friction lining.

An embodiment of the present invention is described below, by way of illustration only, with reference to the accompanying drawings, in which:

Figure 1 shows in partial cross-section an embodiment of brake wear indicating device fitted to a backing plate of a brake pad;

Figure 2 shows in cross-section another embodiment of brake wear indicating device and a backing plate of a brake pad; and

Figure 3 shows a perspective view of the device of Figure 2 fitted to the backing plate.

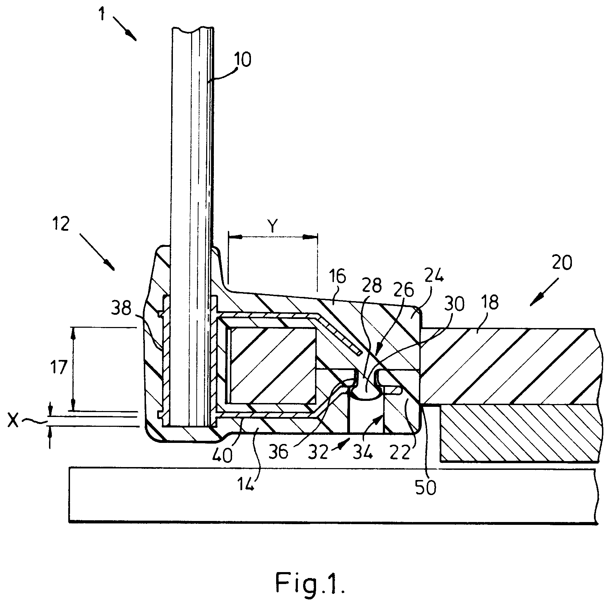

Referring to Figure 1, an embodiment of brake wear indicating device for use with a disc brake is shown. It will be apparent that the brake wear indicating device could also be used with brake shoes for drum brakes.

The brake wear indicating device 1 shown comprises an insulated metal conductor 10, which in this case is a flexible electric wire covered with an insulating sheath, and an end cap 12 made of electrically insulating and resiliently flexible material, such as polyphenylene sulphide or a liquid crystal polymer or polyether ether ketone or any other suitable material. The wire 10 is fixed to the end cap 12 by adhesive, by moulding the end cap around the wire, or by any other suitable method.

The end cap comprises first and second arms 14 and 16, respectively, which extend from the body of the end cap substantially parallel to one another, and with a space 17 between one another of substantially the same width as the width of the backing plate 18 of the brake pad 20. The first and second arms 14,16 extend at substantially ninety degrees relative to the metal conductor 10; although any other suitable angle could be chosen, such that the arms 14,16 extend to one side of the body of the end cap 12.

At the free end of the first and second arms 14,16 there is provided a first or second finger 22,24 respectively. The two fingers 22,24 extend towards one another and are spaced from the body of the end cap by a distance Y.

The first finger 22 comprises a female connector 32 formed of a shaft 34 having an annular rib 36, and the second finger 24 has formed integrally with it a male connector 26 comprising a shank 28 and an enlarged head 30. The annular rib 36 is adapted to engage the enlarged head 30 of the male connector 26 by way of a snap fit, as shown in Figure 1, to hold the two fingers 22,24 together.

Metal strengthening elements are embedded in the end cap 12 to add to its strength, and are particularly useful when the device is subjected to severe vibration and/or high termperatures, which may cause the insulating material of the end cap to weaken. The strengthening elements shown include a tubular element 38 fitted around the end of the metal conductor 10 to provide support for the metal conductor and to strengthen the connection between it and the end cap, and first and second members 40,42 extending from the tubular element 38 into a respective one of the first and second arms 14,16.

The first member 40 extends into the first finger 22 and around the shaft 34. It is disposed so as to add strength to the first arm 14 and also to the interface between the first arm 14 and the first finger. The first member 40 is, advantageously, also arranged to add strength to the annular rib 36 so as to prevent the connection between the rib 34 and the head 30 of the male connector 26 from being broken when the device is subjected to severe vibration and/or high temperatures.

The second strengthening member 42 is bent to extend into the second finger 24, and thereby to add strength to the second finger and to the interface between the second arm 16 and the second finger 24.

At the other end of the metal conductor 10, there is provided a connector (not shown), of any suitable form, for connecting the brake wear indicating device 1 to suitable warning circuitry. Such warning circuitry is well known in the art so is not described in detail here.

As can be seen in Figure 1, the backing plate 18 of the brake pad 20 comprises an aperture 50 for receiving the fingers 22,24 of the end cap 12.

The fingers 22,24 extend from the arms 14,16 by an amount sufficient to allow their ends, and therefore the connectors 26,32, to come into contact with one another when the end cap is fitted to the backing plate 18. The amount by which the fingers 22,24 extend from the arms 14,16 is not made too great, to ensure that a fairly tight fit of the end cap 12 onto the backing plate 18 is provided.

The end of the metal conductor 10 in the end cap 12 extends beyond the front surface 52 of the backing plate 18 by a distance X, as shown in Figure 1. This distance X represents the depth of the friction lining 54 at which the brake pad 20 should be replaced.

In use, as the friction lining 54 of the brake pad 20 is worn by the brake rotor 56, the brake rotor 56 gradually moves closer to the backing plate 18 on braking. Once the friction lining has been worn sufficiently, the brake rotor 56 will, on braking, come into contact with the end cap 12 and break or wear out the top surface of the end cap, thereby coming into contact with the end of the metal conductor 10.

As soon as the brake rotor 56 contacts the metal conductor 10, a circuit through the rotor 56, the metal conductor 10 and part of the warning circuitry (not shown) is completed. This triggers the warning circuitry to generate a warning signal, which is typically a warning light, indicative of the fact that the friction lining is worn and that the brake pad must be replaced.

The brake pad 20 can then be replaced with a new brake pad having fitted to it a new brake wear indicating device 1.

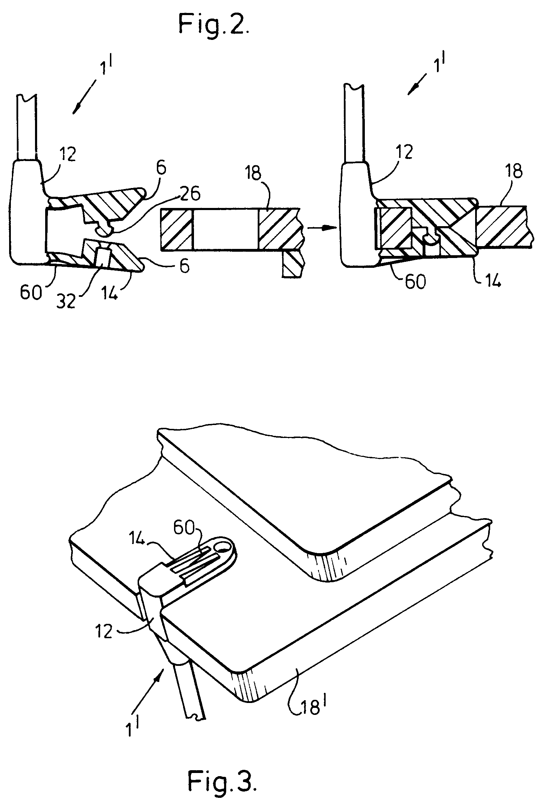

Figure 2 illustrates the steps of fitting the brake wear indicating device to the backing plate 18. The embodiment of brake wear indicating device 1' shown in this Figure differs from the embodiment of Figure 1 by having a pair of longitudinally extending re-inforcing ribs 60 on the outer surface of the first arm 14 (seen better in Figure 3) instead of the metal inserts, and by having the edges at the free ends 62,64 of the first and second arms bevelled.

As can be seen in Figure 2, the bevelled edges of the first and second arms 14,16 extend towards one another when viewed in the direction of the body of the end cap 12, such that each edge slopes inwardly towards the space 17 between the first and second arms 14,16.

To fit the brake wear indicating device 1' to the backing plate 18, the bevelled edges 62,64 of the first and second arms 14,16 of the end cap 12 are pushed against the end of the backing plate 18. This causes the end of the backing plate 18 to move along the bevelled edges by urging the arms 14,16 apart. If necessary, the arms 14,16 can be drawn further apart by hand, or with any suitable tool, to bring the connectors 26 and 32 over their respective side of the backing plate 18. The end cap 12 is then pushed fully onto the backing plate 18 such that the fingers move into the aperture 50 in the backing plate 18, and the edge 66 of the backing plate is received in the space 17 gap between the first and and second 14,16. The fingers 22,24 are then pressed together, manually or by use of any suitable tool, to engage the two connectors 26,32.

In the case where the free ends of the arms 14,16 are not bevelled, the arms can be moved apart manually, or by any other suitable method, to bring them over the backing plate 18.

Figure 3 shows a perspective view of the embodiment of brake wear device 1' of Figure 2 fitted to a backing plate 18'. The backing plate 18' comprises a recess (not visible) into which the body of the end cap 12 can be received, an edge equivalent to the edge 66 at the end of the recess, and an aperture equivalent to the aperture 50 beyond the edge. This arrangement enables the body of the end cap 12 to fit within the lateral boundary of the backing plate.

If necessary or desired, the brake wear indicating device can be removed from the baking plate by urging the two arms apart, by use of any suitable tool or otherwise, to disengage the two connectors 26,32 and to remove the fingers from the aperture 50. If the device 1 and the connectors 26,32 are not damaged, the device can then be refitted to the same or a new brake pad.

The first and second fingers preferably have circular cross-sections, so that the aperture 50 in the backing plate 18 can be circular; this considerably simplifying the manufacture of an aperture for the brake wear indicating device.

Although the embodiments shown comprise two fingers, they could be modified to have a single, longer finger extending from one of the arms which is engaged with a connector provided directly on the other arm.

Of course, the features of the two embodiments described are interchangeable from one embodiment to the other.

## Claims

1. A brake wear indicating device for use in sensing the wear of a friction lining of a vehicle brake, comprising an electrical conductor (10) and an end cap (12) of electrically insulating material for securing the brake wear indicating device (1) to a backing plate (18) of a brake pad or brake shoe (20); the end cap comprising first and second arms (14,16) extending substantially parallel to one another and spaced from one another, a first finger (22) extending from the first arm towards the second arm, and connecting means (26,32) adapted to connect the first finger to the second arm; characterised in that the first and second arms are provided with one or more strengthening elements (40).

2. A brake wear indicating device according to claim 1, comprising a second finger (24) extending from the second arm towards the first arm, the first and second fingers extending towards one another, the connecting means being adapted to connect the first finger to the second arm through the second finger.

3. A brake wear indicating device according to claim 2, wherein the connecting means comprises a male connector (26) on one of the first and second fingers, and a female connector (32) on the other of the first and second fingers.

4. A brake wear indicating device according to claim 3, wherein the male and female connectors provide a snap fit.

5. A brake wear indicating device according to any one of claims 1 to 4, wherein the connecting means is adapted to connect releasably the first finger to the second arm.

6. A brake wear indicating device according to any one of claims 1 to 5, wherein the first and second arms are made of resiliently flexible material.

7. A brake wear indicating device according to any preceding claim, wherein the or each strengthening element (40) is a metal insert.

8. A brake wear indicating device according to any preceding claim, wherein each arm comprises at the free end thereof a bevelled edge (6) arranged to slope towards the space between the first and second arms.

9. A brake wear indicating device according to any preceding claim, wherein the end cap (12) encapsulates and seals one end of the metal conductor (10).

Fig.1.

# Fig.2.

# Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 298 797 (BENDIX FRANCE) <br> * column 2, line 40 - column 4, line 25; figures 1-3 * <br> --- | 1 | F16D66/02 |
| A | EP-A-0 206 487 (GENERAL MOTORS FRANCE) <br> * claim 1; figures 1-4 * <br> --- | 1 | |
| A | US-A-3 783 979 (W. HESS) <br> * column 2, line 23 - line 43; figures 4,5 * <br> ----- | 1 | |

**TECHNICAL FIELDS SEARCHED (Int. Cl.5)**

F16D

The present search report has been drawn up for all claims

| Place of search | Date of completion of the search | Examiner |
|---|---|---|
| THE HAGUE | 09 JULY 1992 | P. CHLOSTA |

EPO FORM 1503 03.82 (P0401)